# EUROPEAN PATENT APPLICATION

(11) **EP 4 530 714 A1**
(43) Date of publication of application: **02.04.2025**
(21) Application number: 23306646.3
(22) Date of filing: 29.09.2023
(51) Int. Cl.: G02F 1/365

(54) **HYBRID SOURCE FOR GENERATING ENTANGLED PAIRS OF PHOTONS**

(71) Applicant: Centre National de la Recherche Scientifique, 75016 Paris (FR); Université Paris Cité, 75006 Paris (FR); Université Paris-Saclay, 91190 Gif-sur-Yvette (FR); STMicroelectronics Crolles 2 SAS, 38920 Crolles (FR)
(72) Inventor: SCHUHMANN, Jérémie, 75003 PARIS (FR); BABOUX, Florent, 75005 PARIS (FR); DUCCI, Sara, 75012 PARIS (FR); BOEUF, Frédéric, 38330 SAINT NAZAIRE LES EYMES (FR); RAINERI, Fabrice, 06300 NICE (FR)
(74) Representative: IPAZ

(57) **Abstract**

The invention relates to a hybrid source for generating pairs of entangled photons (30), the hybrid source (100) comprising:
- at least one A|GaAs waveguide (10) comprising A|GaAs, the at least one A|GaAs waveguide (10) having a second order nonlinearity,
- at least one Silicon-on-Insulator (SOI) platform (20) comprising at least one layer (4, 6, 8) comprising silicon and at least one silicon waveguide (2) comprising silicon,
the at least one A|GaAs waveguide (10) comprising A|GaAs being arranged on the at least one SOI platform (20) such that the at least one A|GaAs waveguide (10) is evanescently coupled to the at least one silicon waveguide (2) in a coupling region, wherein pairs of entangled photons (30) generated in the at least one A|GaAs waveguide (10) upon optical pumping are coupled into the at least one silicon waveguide (2).

## Description

### TECHNICAL FIELD

The present invention relates to a hybrid source for generating entangled pairs of photons. It also concerns a method for manufacturing a hybrid source for generating entangled pairs of photons.

The field of invention is the field of hybrid sources for generating entangled pairs of photons, and more generally the field of semiconductor sources.

### PRIOR ART

Quantum photonics currently plays an essential role in the development of quantum technologies for information transmission and processing. Photons are the preferred qubits in the context of quantum communication and will play a crucial role in interfacing various qubit technologies such as atoms, ions, Nitrogen Vacancy centers, and more.

In this context, the development of miniature integrated sources of quantum light states is indispensable for realizing devices for real-world applications beyond the confines of laboratories. Unlike electronic circuits, where silicon is the material of choice, multiple platforms and approaches are being developed in parallel for quantum photonics, each with its strengths and weaknesses.

Particularly concerning integrated circuits, the Silicon-on-Insulator (SOI) platforms have already achieved a high level of maturity, offering complementary metal-oxide-semiconductor (CMOS) compatibility and access to a wide range of already-developed photonic components. However, when it comes to generating quantum states, this silicon platform has several weaknesses: it possesses an indirect bandgap, making it challenging to realize electrically injected lasers and sources, and it lacks second-order nonlinearity. Although it does exhibit third-order nonlinearity, it is less efficient and presents the drawback, in integrated devices, that the pump wavelength coincides with the wavelength of the generated photons, making filtering difficult.

A purpose of the present invention is to overcome at least one of these drawbacks.

Another purpose of the present invention is to provide a solution for including efficient generation and manipulation of the generated quantum state.

Another purpose of the present invention is to provide a solution for obviating the need for a high rate of on-device filtering.

Another purpose of the present invention is to provide a solution for greatly limiting the energy consumption and therefore the ecological impact compared to the quantum dot approach.

### SUMMARY OF THE INVENTION

At least one of these goals is achieved with a hybrid source for generating pairs of entangled photons, the hybrid source comprising:
- at least one aluminium gallium arsenide (AlGaAs) waveguide comprising AlGaAs, the at least one AlGaAs waveguide having a second order nonlinearity,
- at least one Silicon-on-Insulator (SOI) platform comprising at least one layer comprising silicon and at least one silicon waveguide comprising silicon,
the at least one AlGaAs waveguide comprising AlGaAs being arranged on the at least one SOI platform such that the at least one AlGaAs waveguide is evanescently coupled to the at least one silicon waveguide in a coupling region, wherein pairs of entangled photons generated in the at least one AlGaAs waveguide upon optical pumping are coupled into the at least one silicon waveguide.

The invention relates to the demonstration of a hybrid source of entangled photons combining AlGaAs and silicon-on-insulator (SOI) platform. It combines the efficiency in the photon pair generation rate, associated with the strong second-order nonlinearity of AlGaAs, with the strong maturity of the SOI platform for manipulation of the generated state. The absorption of the AlGaAs pump wavelength by the SOI makes a high on-chip filtering rate unnecessary. Advantageously, when the source is used at room temperature, this greatly limits the energy consumption and therefore the ecological impact compared to the quantum dot approach.

The photon pairs, generated upon optical pumping in an AlGaAs waveguide are transferred to the SOI platform by evanescent coupling, preserving the properties of the produced quantum state. The source according to the invention is designed to optimize the nonlinear conversion efficiency for two-phase matching processes: type 0 Spontaneous Parametric Down-Conversion (SPDC), where a Transverse Magnetic (TM) polarized pump beam generates TM polarized photons, and type 2, where a Transverse Electric (TE) pump beam generates orthogonally polarized photons. Type 1 Spontaneous Parametric Down-Conversion (SPDC), where a Transverse Magnetic (TM) polarized pump beam generates TE polarized photons can also be implemented. The hybrid source is designed to achieve the optical mode transfer from the AlGaAs waveguide to the silicon one, which are superimposed along the longitudinal direction corresponding to the propagation mode.

The adiabatic coupling scheme permits to have high coupling efficiency with minimized mode conversion to higher-order modes or radiation modes, together with minimized oscillations of the transmission as a function of the coupling length. This ensures enhanced fabrication tolerances compared e.g. to directional coupling, which in addition would require extended effective mode index matching between the waveguides.

More particularly, the at least one AlGaAs waveguide permits to lead to devices having a higher conversion efficiency with respect to third-order based nonlinear platforms such as Si. Of course, the AIGaAs waveguide may comprise other adapted semi-conductor materials.

The at least one Silicon-on-Insulator (SOI) platform guarantees the CMOS compatibility of the device and access to a large range of already developed optical functionalities.

Advantageously, the at least one AlGaAs waveguide comprising AlGaAs may have a tapered shape. The tapered shape of the AlGaAs waveguide permits to gradually and adiabatically transfer the optical power to the Si waveguide.

The wavelength of the photons generated in the at least one AlGaAs waveguide and propagating through the at least one silicon waveguide may be comprised between 1100nm and 3.6µm. For instance, the wavelength may belong to the telecom C (or C+L) band. Preferably, the wavelength of the photons generated may be 1550 nm.

According to a preferred embodiment, the at least one AlGaAs waveguide may comprise a succession of distinct layers of GaAs-based material and may comprise at least one Bragg mirror, the GaAs layers having different aluminium concentrations.

The at least one Bragg mirror permits to engineer the modal dispersion.
The hybrid source may comprise at least one bonding layer, the at least one AlGaAs waveguide being attached on the at least one SOI platform using a wafer bonding technique. Advantageously, the bonding layer may comprise an adhesive polymer as, for example, benzocyclobutene. Preferably, the wafer bonding technique may be an adhesive bonding technique or molecular bonding. Adhesive bonding consists in bonding two materials (wafers or dies) using a polymer. By heating the system while applying a compressive force, the polymerization of the polymer turns it from liquid phase into a rigid bond between our two structures. Wafer bonding technique is used to integrate the AlGaAs waveguide on the SOI platform.

Advantageously, the at least one bonding layer may comprise a low refractive index material. We mean by "a low refractive index material", a refractive index comprised between 1 and 2.5. The low refractive index material may comprise dielectric component or a polymer. Preferably, the polymer may correspond to benzocyclobuten (BCB). The advantage being the high tolerance to roughness on both surfaces, and the low polymerization temperature of BCB (below 320°C).

The at least one silicon waveguide may have a rectangular or an inverted T shape. The particular shape of the silicon waveguide permits to optimize light confinement.

Advantageously, the at least one SOI platform may comprise at least one layer of silicon and at least one layer of silicon oxide.

According to another aspect of the invention, it is proposed a method for manufacturing a hybrid source for generating pairs of entangled photons according to the invention, wherein the method comprises at least the following steps:
- depositing the at least one AlGaAs waveguide comprising AlGaAs on the at least one Silicon-on-Insulator platform comprising at least one layer comprising silicon and at least one silicon waveguide comprising silicon, and
- etching of the at least one AlGaAs waveguide, the at least one AlGaAs waveguide being evanescently coupled to the at least one silicon waveguide in a coupling region.

The method may further comprise a step of deposition of a bonding layer on the at least one Silicon-on-Insulator (SOI) platform.

Advantageously, the at least one AlGaAs waveguide and/or the at least one silicon waveguide is patterned via lithography and then etched via plasma-deep reactive ion etching. This technique provides fine control of the slope of the waveguide flanks, as required by the coupling design.

### Description of the figures and embodiments

Other advantages and particularities of the invention will appear from reading the detailed description of implementations and embodiments in no way limiting, and the following annexed drawings:
**[****Fig. 1****]** illustrates a representation of a hybrid source for generating pairs of entangled photons according to the invention,
**[****Fig. 2****]** illustrates a representation of a hybrid source for generating pairs of entangled photons according to an embodiment of the invention.
**[****Fig. 3****]** illustrates a representation of a hybrid source for generating pairs of entangled photons according to another embodiment of the invention.
**[****Fig. 4****]** illustrates a representation of a hybrid source for generating pairs of entangled photons according to another embodiment of the invention.
**[****Fig. 5****]** illustrates a representation of a coupling design for type 1 phase-matching hybrid source according to an embodiment of the invention,
**[****Fig. 6****]** illustrates a representation of a coupling design for type 0 or 2 phase-matching hybrid source according to an embodiment of the invention,
**[****Fig. 7****]** illustrates a representation of fabrication steps of a hybrid source for generating pairs of entangled photons according to an embodiment of the invention.

These embodiments being in no way limiting, one may in particular consider variants of the invention comprising only a selection of characteristics described or illustrated subsequently isolated from the other characteristics described or illustrated (even if this selection is isolated within a sentence comprising these other characteristics), if this selection of characteristics is sufficient to confer a technical advantage or to differentiate the invention from the state of the previous technique. This selection includes at least one feature of functional preference without structural details, and / or with only part of the structural details if this part alone is sufficient to confer a technical advantage or to differentiate the invention from the prior art.

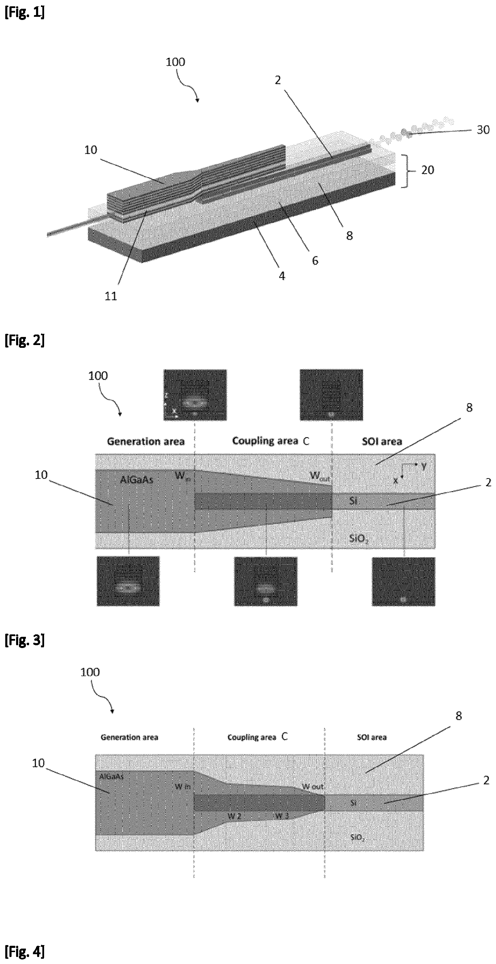

We will first describe, with reference to figure 1, an example of a hybrid source 100 for generating pairs of entangled photons 30 according to the invention. The hybrid source 100 comprises one AlGaAs waveguide 10 having a tapered shape, the AlGaAs waveguide 10 having a second order nonlinearity and one Silicon-on-Insulator (SOI) platform 20 comprising one silicon layer 4, 6, 8 and one silicon waveguide 2. The AlGaAs waveguide 10 is arranged on the SOI platform 20 so that the taper of the AlGaAs waveguide 10 is evanescently coupled to the silicon waveguide 2 in a coupling region or coupling area C, wherein pairs of entangled photons 30 generated in the AlGaAs waveguide 10 upon optical pumping are coupled into the silicon waveguide 2.

The AlGaAs source is a nano-fabricated waveguide generating bi-photon states via spontaneous parametric down-conversion (SPDC): a pump beam at frequency ωp is coupled into the waveguide and undergoes a down-conversion process producing pairs of photons 30 at frequencies ωs and ωi, such that ωp = ωs + ωi for energy conservation. Bragg mirrors 11, obtained by tuning the aluminium concentration of the different AlGaAs layers, provide both a photonic bandgap confinement for the pump and total internal confinement for the produced photons 30.

An example of structure is shown in Figure 1. The AlGaAs waveguide 10 is grown on a GaAs substrate and features a core made of *AL*_{0,45}*Ga*_{0,55}*As* sandwiched between two Bragg mirrors 11, consisting of alternating *AL*_{0,25}*Ga*_{0,75}*As* layers and *AL*_{0,2}*Ga*_{0,8}*As* layers. The mirrors are asymmetric. Six pairs of layers are used on the substrate side, two on the other. This assures a good mode confinement, while resulting more compatible to hybridization. The materials cited, the number of Bragg mirrors and/or the number of pairs of layers in this embodiment are in no way limitative. An example of the AlGaAs waveguide 10 composition is detailed in the following table 1.

| Example structure | | | |
|---|---|---|---|
| **Layer** | **Cycles** | **Δz (nm)** | **x (%)** |
| Substrate | 1 | - | 0 |
| Etch-stop | 1 | 300 | 85 |
| Bottom cap | 1 | 10 | 0 |
| Bottom Bragg | 6 | 320 | 80 |
| | | 116 | 25 |
| Core | 1 | 364 | 25 |
| Top Bragg | 2 | 116 | 25 |
| | | 320 | 80 |
| Top cap | 1 | 10 | 0 |
| InGaP | 1 | 10 | - |

The AlGaAs waveguide 10 may have different shapes according to various embodiments. For example, the AlGaAs waveguide 10 may have a lineartaper or a multi lineartaper or an adiabatic nonlinear taper shape. A linear taper is designed to gradually and adiabatically transfer the optical power to the Si waveguide 2. The phase matching width, corresponding to the width at which the optical power is equally distributed between the AlGaAs 10 and Si 2 waveguides, is dependent on the mode polarization, due to the modal birefringence. The taper is designed to achieve the transfer for both TE and TM modes.

More particularly, according to the figure 2, the AlGaAs waveguide 10 may have a linear taper shape. The AlGaAs waveguide 10 is divided into two areas, a "generation area" and a "coupling area C". The coupling area C corresponds to the coupling region. In this embodiment, the AlGaAs waveguide 10 has an input width *Wᵢₙ* greater than its output width *Wₒᵤₜ.* The generation area has a rectangular shape while the coupling area C has a conical shape. *Wᵢₙ* needs to be large enough to ensure a good conversion of the AlGaAs fundamental mode into the coupled region mode. *Wₒᵤₜ* may be chosen to ensure effective coupling from the even coupled region mode to the SOI mode at the output of the taper.

According to another embodiment, as represented in figure 3, the AlGaAs waveguide 10 may have a multi-linear taper shape. To improve the transmission efficiency of the optical power between the AlGaAs waveguide 10 while reducing the footprint, the linear taper geometry can be optimized in various ways. The taper has three different linear sections, in which the width of the AlGaAs waveguide 10 is quickly reduced in the first and third section of the taper in the coupling area C, while the variation is slower in the central region of the coupling area C. The parameters of interest are W2 and W3. W2 is greater than W3. An improvement with respect to the linear design can be obtained in terms of transmission efficiency by increasing the adiabaticity of the taper in the central area. The advantage of this design is that it represents the same computational complexity as linear taper but ensures better performance.

According to another embodiment, as represented in figure 4, the AlGaAs waveguide 10 may have an adiabatic nonlinear taper shape. This design leads to a more efficient coupling between the AlGaAs waveguide10 with a smaller footprint. In this embodiment, the taper in the coupling area has curved sides.

As can be seen from figure 1, the SOI platform 20 comprises different layers. The number of layers is in no way limiting. The number and type of layers in the SOI platform 20 depends on the embodiment of the invention. For example, the SOI platform 20 may be a SOI platform for hybrid type 1 phase-matching or a SOI platform for hybrid type 0 or type 2 phase-matching.

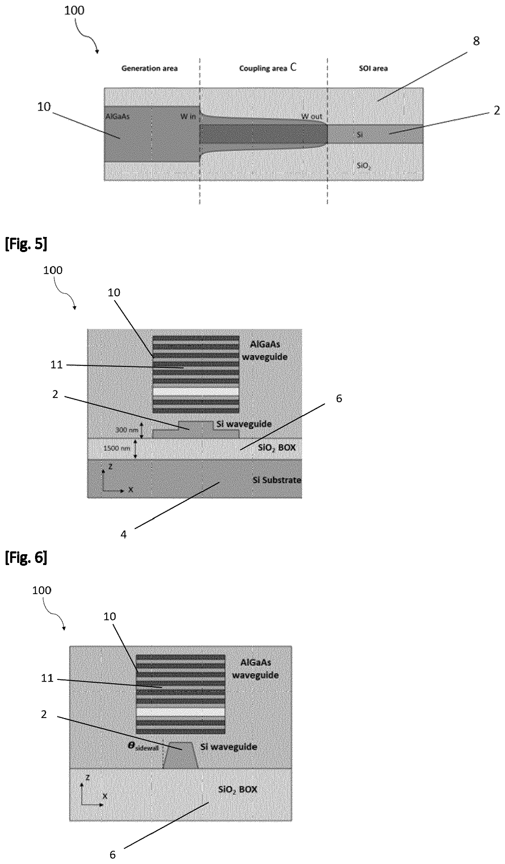

According to an embodiment as represented in figure 5, the SOI platform 20 for hybrid type 1 phase-matching may be made of a Si based substrate layer 4, covered with a Buried Oxide layer 6 (BOX) of *SiO*₂. The BOX 6 is meant to isolate the top monocrystalline Si waveguide 2 layer from the substrate thanks to the high optical index contrast at 1550 nm.

According to an embodiment as represented in figure 6, the SOI platform 20 for SOI for hybrid type 0/type2 phase-matching may be made of a Si substrate layer, a BOX layer 6, and a Si top layer for example.

With reference to figure 1, the AlGaAs waveguide 10 is coupled to the Si waveguide 2 by adiabatic coupling. This method relies on the fact that the electromagnetic eigen modes are confined into both AlGaAs and Si waveguide (called supermode). By varying the width of the Si waveguide and/or the AlGaAs waveguide, it is possible to transfer all the optical power from the AlGaAs waveguide down to the Si waveguide 2. The various sets of tapered structures aim to provide a transmission efficiency as high as possible while minimizing the footprint and ensuring acceptable robustness and manufacturability. A laser, for example, a near-infrared linearly polarized CW or pulsed laser, is injected into the AlGaAs waveguide 10, where the signal and idler photons are generated before being transmitted through the coupling area C to the Si waveguide 2 in the SOI platform 20.

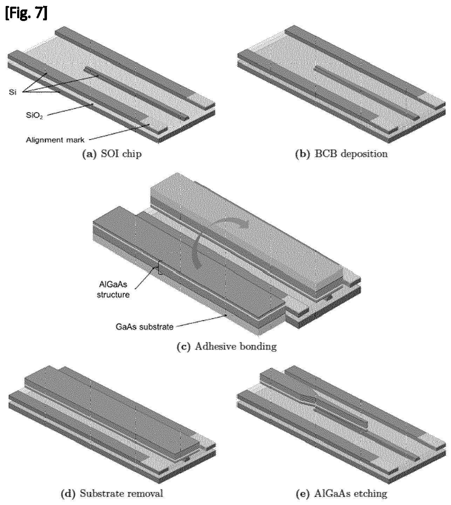

We will now describe, with reference to figure 7, a method for manufacturing a hybrid source 100 for generating pairs of entangled photons 30 according to an embodiment of the invention. The method comprises the following steps:
- preparation of the SOI platform 20 by modelling and etching of the silicon waveguide 2 on the silicon layer 8,
- preparation of the AlGaAs waveguide 10 by stacking of distinct layers of GaAs substrate,
- positioning of the AlGaAs waveguide 10 on the SOI platform 20,
- etching of the AlGaAs waveguide 10, the AlGaAs waveguide 10 being evanescently coupled to the at least one silicon waveguide 2 in a coupling region C.

In the embodiment of figure 7, the following operations are represented:
a) Si waveguide 2 etching and marks deposition for AlGaAs alignment marks,
b) low refractive index material deposition on the SOI platform 20,
c) AlGaAs integration on SOI through wafer bonding technique,
d) GaAs substrate removing,
e) AlGaAs waveguide 10 etching.

In the step a), the SOI platform 20 is prepared. The different layers 4, 6, 8 of the SOI platform 20 are assembled. The Si waveguide 2 is patterned, for example, via electron beam lithography and then etched via inductive coupled plasma-deep reactive ion etching (ICP-DRIE). In others embodiments, the Si waveguide 2 may be patterned via deep UV lithography and etched via chemical etching. This technique provides fine control of the slope of the waveguide flanks, as required by the coupling design. The SOI platform 20 may comprise alignment marks. Alignment marks may be also directly etched on the platform during this step. The surface roughness is treated and an adhesion promoter is applied.

In the step b), a low refractive index material is spin-coated onto the SOI platform 20. The low refractive index material may be for example benzocyclobuten (BCB) or Silica. The process is tuned in order to reach the desired thickness. Meanwhile, a layer, for example of *SiO*₂ is deposited onto the bonding side of the AlGaAs waveguide 10, followed by the application of the same adhesion promoter.

The step c) corresponds to the AlGaAs waveguide 10 integration on the SOI platform 20 through wafer bonding technique, and more particularly, for example, adhesive bonding. Some surface treatments are still required to enhance the adhesion of the bonding layer. The two structures are superimposed one to the other, facing the treated sides. By heating up the system and applying a compressive force, the polymerization of the low refractive index material turns it from liquid phase into a rigid bond between the two structures. More particularly, in the embodiment of SOI platform 20 for hybrid type 1 phase-matching, the SOI platform 20 is fabricated by performing successive dry etchings to pattern the components. In this structure, the Si waveguide 2 is thinner. The mode is consequently closer to the AlGaAs waveguide 10, and therefore, the coupling constant is stronger. In the embodiment of SOI platform 20 for hybrid type 0 or type 2 phase-matching, a positive resist is spin coated on the SOI platform 20. The patterns of Si waveguide 2 and alignment marks are drawn. After a chemical development that reveals the mask patterns, an Inductive Coupled Plasma-Deep Reactive Ion Etching (ICP-DRIE) SPTS technology for example is used to etch the Si waveguide 2. Due to the patterning process, the Si waveguide 2 has slightly sloping flanks providing an additional degree of control in the coupler design. This flank angle can be adjusted. The SOI platform 20 is covered with alignment marks etched directly on Si within the same etching step as the waveguide.

Concerning the AlGaAs waveguide 10, AlGaAs wafers are grown for example, with an Molecular Beam Epitaxy (MBE) process or metallo organic chemical vapor deposition, resulting wafers with thick GaAs substrate on which the AlGaAs stack is deposited with different aluminium concentrations. After the epitaxial growth of the AlGaAs layers, the waveguide 10 is etched either with chemical (after optical lithography) or inductively coupled plasma (ICP, after e-beam lithography) etching.

To enhance further the bonding strength on both surfaces, a primer may be applied on SOI platform 20 and a side of the AlGaAs waveguide 10. A diluted solution of BCB and mesitylene is then spin-coated on the SOI platform 20 before proceeding to the bonding.

The step d) consists in removing the GaAs substrate in order to access the AlGaAs stack that needs to be processed to manufacture the AlGaAs waveguide 10. To do so, chemical etching of GaAs is done. A layer of a material may be used as an etch stop layer. For example, the material may be AlGaAs or InGaP.

The step e) consists of the etching of the AlGaAs waveguide 10. Depending on the purpose and the complexity of the AlGaAs sample processed, different etching techniques may be used either 'wet' or dry etching. The plasma used for etching may contain Cl2 and or HBr gas. The alignment of the different steps of the etching process makes use of alignment marks in the SOI platform 20 in the case of hybrid type 0 or type 2 phase-matching or SOI platform for hybrid type 1 phase-matching.

The last step consists of cleaving the structures orthogonally to the direction of propagation of the guides in order to obtain sharp facets for injection/collection of light from/to free space.

Of course, the invention is not limited to the examplesjust described and many adjustments (such as composition and dimension of the layers and shape of the tapers) can be made to these examples without going beyond the scope of the invention.

## Claims

1. Hybrid source for generating pairs of entangled photons (30), the hybrid source (100) comprising:
- at least one AlGaAs waveguide (10) comprising AlGaAs, the at least one AlGaAs waveguide (10) having a second order nonlinearity,
- at least one Silicon-on-Insulator (SOI) platform (20) comprising at least one layer (4, 6, 8) comprising silicon and at least one silicon waveguide (2) comprising silicon,
the at least one AlGaAs waveguide (10) comprising AlGaAs being arranged on the at least one SOI platform (20) such that the at least one AlGaAs waveguide (10) is evanescently coupled to the at least one silicon waveguide (2) in a coupling region (C), wherein pairs of entangled photons (30) generated in the at least one AlGaAs waveguide (10) upon optical pumping are coupled into the at least one silicon waveguide (2).

2. Hybrid source according to claim 1, wherein the at least one AlGaAs waveguide (10) comprising AlGaAs has a tapered shape.

3. Hybrid source according to any one of preceding claims, wherein the wavelength of the photons (30) generated in the at least one AlGaAs waveguide (10) and propagating through the at least one silicon waveguide (2) is comprised between 1100nm and 3.6µm.

4. Hybrid source according to any one of preceding claims, wherein the at least one AlGaAs waveguide (10) comprising a succession of distinct layers of GaAs-based material and comprising at least one Bragg mirror, the GaAs layers having different aluminium concentrations.

5. Hybrid source according to any one of preceding claims, further comprising at least one bonding layer (8), the at least one AlGaAs waveguide (10) being attached on the at least one SOI platform (20) using a wafer bonding technique.

6. Hybrid source according to claim 5, wherein the at least one bonding layer (8) comprises a low refractive index material.

7. Hybrid source according to any one of the preceding claims, wherein the at least one silicon waveguide (20) has a rectangular or an inverted "T" shape.

8. Hybrid source according to any one of the preceding claims, wherein the at least one SOI platform (20) comprises at least one layer of silicon (4) and at least one layer of silicon oxide (6).

9. Method for manufacturing a hybrid source for generating pairs of entangled photons (30) as defined in claims 1 to 8, wherein the method comprises at least the following steps:
- depositing the at least one AlGaAs waveguide (10) comprising AlGaAs on the at least one Silicon-on-Insulator (SOI) platform (20) comprising at least one layer (4, 6, 8) comprising silicon and at least one silicon waveguide (2) comprising silicon, and
- etching of the at least one AlGaAs waveguide (10), the at least one AlGaAs waveguide (10) being evanescently coupled to the at least one silicon waveguide (2) in a coupling region (C).

10. Method for manufacturing a hybrid source according to claim 9, wherein the method further comprises a step of deposition of a bonding layer on the at least one Silicon-on-Insulator (SOI) platform (20).

11. Method for manufacturing hybrid source according to any one of claims 9 to 10, wherein the at least one AlGaAs waveguide (10) and/or the at least one silicon waveguide (2) is patterned via lithography and then etched via plasma-deep reactive ion etching.
